Europäisches Patentamt

European Patent Office

Office européen des brevets

Veröffentlichungsnummer: **0 275 486**

**A2**

# EUROPÄISCHE PATENTANMELDUNG

Anmeldenummer: **87118577.3**

Int. Cl.⁴ **H02J 3/14**

Anmeldetag: **15.12.87**

Priorität: **20.01.87 DE 3701493**

Veröffentlichungstag der Anmeldung:
**27.07.88 Patentblatt 88/30**

Benannte Vertragsstaaten:
**AT BE CH DE ES FR GB GR IT LI LU NL SE**

Anmelder: **Nixdorf Computer
Aktiengesellschaft
Fürstenallee 7
D-4790 Paderborn(DE)**

Erfinder: **Obelode, Jürgen
Annastrasse 14
D-4803 Steinhagen(DE)**
Erfinder: **Laue, Hans-Bodo
Eggering 60
D-4791 Altenbeken(DE)**

Vertreter: **Patentanwälte Schaumburg &
Thoenes
Mauerkircherstrasse 31 Postfach 86 07 48
D-8000 München 80(DE)**

**Schaltungsanordnung zum Verteilen elektrischer Speiseleistung auf mehrere Funktionseinheiten.**

Die Erfindung befaßt sich mit dem Verteilen elektrischer Speiseleistung auf mehrere Funktionseinheiten (10, 11, 12) mit variabler Leistungsaufnahme. Dabei wird ein vorgegebener Grenzwert (Pmax) der Gesamtspeiseleistung eingehalten, der niedriger ist als die Summe der höchstmöglichen Einzelspeiseleistungen (P10, P11, P12). Durch Auswertung der Gesamtstromaufnahme (I) aller Funktionseinheiten (10, 11, 12) oder ihrer Betriebsspannung (U) wird ein Ansteigen des Speisestroms bzw. ein Absinken der Betriebsspannung (U) dazu benutzt, den Speisestrom (I3) von Funktionseinheiten (12) geringer Bedeutung zugunsten des Speisestroms von Funktionseinheiten (11) höherer Bedeutung zu reduzieren. Die Erfindung findet besondere Anwendung bei elektrischen Fernsprechteilnehmerstationen, die über die Teilnehmeranschlußleitung gespeist werden.

FIG. 1

## Schaltungsanordnung zum Verteilen elektrischer Speiseleistung auf mehrere Funktionseinheiten

Die Erfindung betrifft eine Schaltungsanordnung zum Verteilen elektrischer Speiseleistung auf mehrere Funktionseinheiten mit variabler Leistungsaufnahme bei Einhaltung eines vorgegebenen Grenzwertes der Gesamtspeiseleistung, der niedriger ist als die Summe der höchstmöglichen Einzelspeiseleistungen, insbesondere für leitungsgespeiste elektronische Teilnehmerstationen von Fernmelde-, insbesondere Fernsprechanlagen.

Wenn ein elektrisches System mit Speisestung versorgt werden soll, das mehrere Funktionseinheiten mit variabler Leistungsaufnahme enthält, so kann bei begrenzter Kapazität der Stromquelle ein Grenzwert für die Gesamtspeiseleistung vorgegeben sein, der dann überschritten würde, wenn alle Funktionseinheiten des Systems mit ihrer höchstmöglichen Einzelspeiseleistung versorgt würden. Es besteht dann das Problem, abhängig von dem Betriebszustand der Funktionseinheiten eine Verteilung der elektrischen Speiseleistung derart vorzunehmen, daß Funktionseinheiten mit höherer Priorität keine Betriebsbeeinträchtigung erfahren, während bei Funktionseinheiten geringerer Priorität vorübergehend eine Absenkung der Leistung in Kauf genommen werden kann. Eine Begrenzung der Gesamtspeiseleistung kann dadurch bedingt sein, daß Stromversorgungsgeräte beabsichtigt nur eine begrenzte Leistung abgeben oder daß die Stromversorgung über vergleichsweise dünne und lange Leitungen erfolgt.

Ein Beispiel für ein elektrisches System, bei dem mehrere Funktionseinheiten mit zumindest teilweise variabler Stromaufnahme zu speisen sind und gleichzeitig ein Grenzwert der Gesamtspeiseleistung vorgegeben wird, ist eine sogenannte "intelligente" Fernsprechteilnehmerstation, die über die Teilnehmeranschlußleitung aus der Zentralbatterie einer Fernsprechanlage gespeist wird. Eine solche Fernsprechteilnehmerstation enthält Steuerschaltungen, die einen relativ geringen Leistungsbedarf haben, da sie meist durch Mikroprozessoren realisiert werden. Andererseits enthält sie aber auch Funktionseinheiten mit höherem Leistungsbedarf, die Verstärker für Hörer und Mikrofon sowie gegebenenfalls für Lauthören enthalten können. Solche Funktionseinheiten nehmen abhängig von ihrer Aussteuerung unterschiedlich starken Strom auf, was dazu führen kann, daß bei begrenzter verfügbarer Gesamtspeiseleistung möglicherweise die steuernde Funktionseinheit durch zu geringen Speisestrom ausfällt. Es besteht also die Forderung, die Speisung von Funktionseinheiten mit höherer Priorität in jedem Falle aufrecht zu erhalten und nicht durch vorübergehend hohen Strombedarf von Funktionseinheiten geringerer Priorität zu beeinträchtigen.

Um diese Forderung zu erfüllen, können die Funktionseinheiten so dimensioniert werden, daß auch bei maximaler Speiseleitungslänge, also bei minimaler verfügbarer Gesamtspeiseleistung, die Summe aller höchstmöglichen Einzelleistungen dieser Gesamtspeiseleistung entspricht. Dies hat aber den Nachteil, daß die Schaltungsdimensionierung auf maximale Leitungslänge abgestellt ist und somit beim Einsatz eines solchen Systems bei kurzer Leitungslänge die verfügbare Speiseleistung nicht voll ausgenutzt wird. Es ist auch möglich, Funktionseinheiten mit höchster Priorität, die also unabhängig vom Betriebszustand anderer Funktionseinheiten immer zuverlässig arbeiten müssen, kurzzeitig ohne Leistungsaufnahme über die Speiseleitung funktionsfähig zu halten. Eine solche Lösung hat den Nachteil, daß mechanische Umschaltekontakte und/oder zusätzliche örtliche Stromquellen vorgesehen sein müssen. Im Zuge der Entwicklung immer leistungsfähigerer Fernsprechteilnehmerstationen, die relativ umfangreiche Anzeigefelder und mit digitaler Technik verwirklichte neue Leistungsmerkmale haben, ist eine Erhöhung der Speiseleistung der entsprechenden Funktionseinheiten unumgänglich. Dies betrifft insbesondere die steuernden Funktionseinheiten, deren Strombedarf dann in einem Bereich liegt, in dem eine vorübergehende Unterbrechung der Leistungsaufnahme auch bei vorgesehenen zusätzlichen Stromquellen technisch nicht mehr vertretbar ist.

Es ist Aufgabe der Erfindung, eine Möglichkeit zum Verteilen elektrischer Speiseleistung auf mehrere Funktionseinheiten anzugeben, durch die eine automatische Verteilung verfügbarer Speiseleistung entsprechend der Priorität der Funktionseinheiten erreicht wird und das Überschreiten eines vorgegebenen Grenzwertes des Gesamtleistungsbedarfes durch diese Verteilung verhindert wird.

Eine Schaltungsanordnung eingangs genannter Art ist zur Lösung dieser Aufgabe erfindungsgemäß derart ausgebildet, daß ein Ansteigen der Leistungsaufnahme von Funktionseinheiten höherer Priorität eine proportionale Verringerung der Leistungsaufnahme für Funktionseinheiten geringerer Priorität verursacht, sofern durch dieses Ansteigen der Bereich des vorgegebenen Grenzwertes erreicht wird.

Durch die Erfindung ist es möglich, ein mit mehreren Funktionseinheiten ausgestattetes System, also beispielsweise eine moderne Fernsprechteilnehmerstation, mit elektrischer Speiseleistung bis zu einem vorgegebenen Grenzwert zu versorgen und dabei die Leistungsaufnahme von Funktionseinheiten höchster Priorität in jedem Falle sicherzustellen, indem ein Ansteigen des Strombedarfs solcher Funktionseinheiten zu einem Einsetzen der Verteilfunktion führt. Die Bedingung, daß dabei der Bereich des vorgegebenen Grenzwertes erreicht werden soll, bedeutet, daß nicht das Ansteigen der Stromaufnahme einzelner Funktionseinheiten direkt ausgewertet wird, sondern es wird die dem System zugeführte Gesamtleistung überwacht und deren Annähern an den vorgegebenen Grenzwert festgestellt. Wenn dies durch ein Ansteigen der Leistungsaufnahme von Funktionseinheiten herbeigeführt wird, so kann ein damit auftretendes Steuerkriterium zu einer proportionalen Verringerung des Speisestroms für andere Funktionseinheiten ausgenutzt werden, deren Priorität geringer ist, so daß ihre vorübergehend reduzierte Speisung in Kauf genommen werden kann. Durch diese automatische Funktion wird eine dynamische Verteilung der elektrischen Leistung erreicht, denn es wird abhängig vom Betriebszustand der wichtigeren Funktionseinheiten eine laufende Neueinstellung der Verteilung vorgenommen, so daß eine optimale Ausnutzung der begrenzten Gesamtspeiseleistung gegeben ist.

Für die Funktionseinheiten höherer Priorität kann in weiterer Ausbildung des Erfindungsgedankens eine Strombegrenzung vorgesehen sein. Dies hat den Vorteil, daß ein Ansteigen der Stromaufnahme, das in diesen Funktionseinheiten beispielsweise durch Kurzschlüsse oder Übersteuerungen verursacht werden kann, nicht zu einem völligen Ausfall der Funktionseinheiten höchster Priorität führt, da für diese dann noch eine Restleistung innerhalb der verfügbaren Gesamtspeiseleistung erhalten bleibt.

Zur Verringerung der Leistungsaufnahme für Funktionseinheiten geringerer Priorität kann ein Regelkreis vorge sehen sein, dessen Steuergröße die allen Funktionseinheiten zugeführte Gesamtleistung ist. Ein solcher Regelkreis wird z.B. bei Auswertung des Gesamtstroms auch dann wirksam, wenn sich der Speisestrom einer ihm zugeordneten Funktionseinheit geringerer Priorität erhöht. Damit ist eine weitere Verbesserung des erfindungsgemäßen Verteilprinzips der elektrischen Speiseleistung verbunden, denn es wird zusätzlich eine strombegrenzende Funktion direkt auf die Funktionseinheit geringerer Priorität ausgeübt.

Als Ausführungsbeispiel der Erfindung wird im folgenden die Verteilung elektrischer Speiseleistung für eine elektronische Fernsprechteilnehmerstation beschrieben. Die Erläuterung wird zeigen, daß die Erfindung allgemein Bedeutung hat für vergleichbare Systeme, die nicht in der Fernsprechtechnik, sondern auf anderen Gebieten angewendet werden, beispielsweise bei der Datenübertragungstechnik oder in der Fernwirktechnik.

Fig. 1 zeigt eine Prinzipdarstellung der elektrischen Speisung einer Fernsprechteilnehmerstation,

Fig. 2 zeigt eine graphische Darstellung der Wirkungsweise der dynamischen Verteilung elektrischer Speiseleistung auf die Funktionseinheiten der Fernsprechteilnehmerstation,

Fig. 3 zeigt eine weitere Prinzipdarstellung der Fernsprechteilnehmerstation mit Speiseschaltung und Regelkreis und dem Gesamtstrom als Regelgröße und

Fig. 4 zeigt eine weitere Prinzipdarstellung der Fernsprechteilnehmerstation mit der Betriebsspannung als Regelgröße.

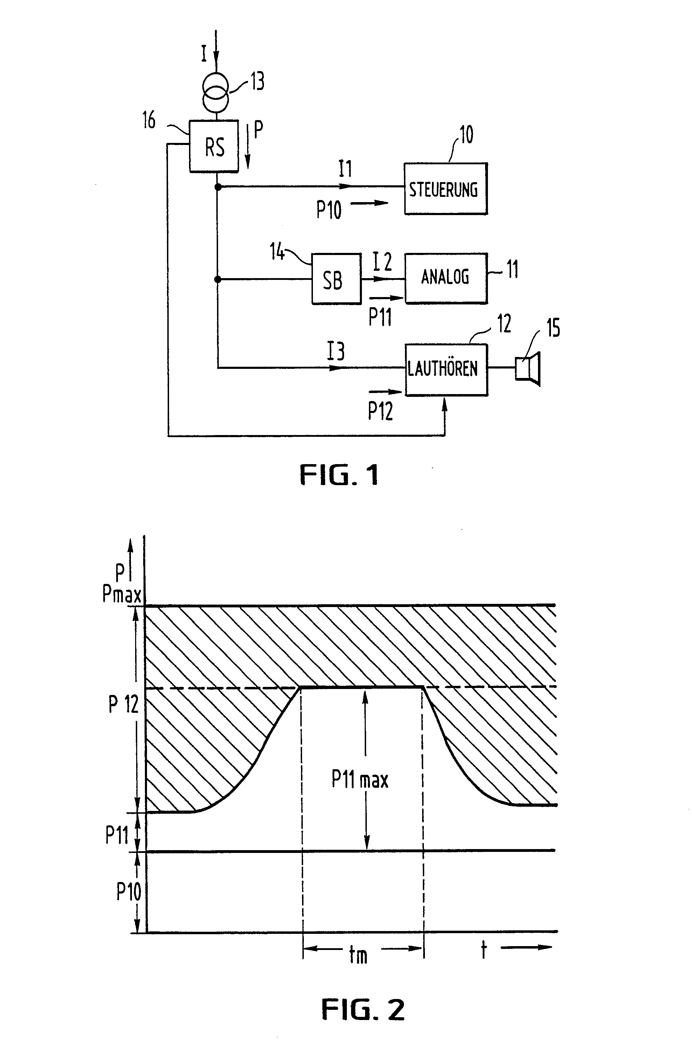

In Fig. 1 sind in Blockdarstellung drei Funktionseinheiten 10, 11 und 12 einer Fernsprechteilnehmerstation dargestellt, deren Stromversorgung über die Teilnehmeranschlußleitung 13 erfolgt, welche als Stromquelle dargestellt ist, die einen Gesamtstrom I liefert. Die Funktionseinheit 10 dient der Steuerung der Betriebsabläufe innerhalb der Fernsprechteilnehmerstation und wird hierzu mit einem Strom I1 bzw. einer Leistung P10 gespeist. Mit der Funktionseinheit 10 werden die Betriebsabläufe gesteuert, die sich aus dem Betätigen einer Tastatur ergeben, zur Informationsdarstellung auf einem Anzeigefeld erforderlich sind oder bei der Ausnutzung von Leistungsmerkmalen wie beispielsweise Wahl bei aufgelegtem Handapparat, Freisprechen oder Datenübertragung erforderlich sind. Solche Steuerfunktionen können mit Mikroprozessoren durchgeführt werden, die eine vergleichsweise geringe Stromaufnahme haben, welche jedoch bei jedem Betriebszustand der Fernsprechteilnehmerstation aufrecht erhalten bleiben muß.

Die Funktionseinheit 11 enthält analoge Funktionen, beispielsweise eine elektronische Gabelschaltung, einen Hörverstärker und einen Mikrofonverstärker. Sie wird mit einem Strom I2 bzw. einer Leistung P11 gespeist, die gegebenenfalls relativ hohe Werte annehmen kann, wenn beispielsweise ein Verstärker übersteuert wird. Der Speisestrom I2 kann aber mit einer Strombegrenzungsschaltung 14 auf einen zulässigen Wert begrenzt werden. Diese mit SB bezeichnete Strombegrenzungsschaltung 14 ist der analogen Funktionseinheit 10 vorgeschaltet.

Die Funktionseinheit 12 enthält einen Verstärker für Lauthören. Sie wird durch einen Strom I3 bzw. eine Leistung P12 gespeist und betreibt einen Lautsprecher 15. Auch hier kann der Speisestrom I3 vergleichsweise hohe Werte annehmen, die von der Aussteuerung des Lauthörverstärkers abhängen. Die Stromaufnahme der Funktionseinheit 12 kann aber durch eine Regelschaltung 16 begrenzt bzw. reduziert werden, die in noch zu beschreibender Weise abhängig von der Gesamtleistung P gesteuert wird und mit RS bezeichnet ist.

Die Funktionseinheiten 10, 11 und 12 unterscheiden sich durch ihre Wichtigkeit bzw. Priorität für die Verteilung der verfügbaren elektrischen Speiseleistung. Obwohl die Funktionseinheit 10 einen vergleichsweise geringen Strombedarf hat, muß doch die laufende Speisung mit dem Speisestrom I1 gewährleistet sein, ohne daß Beeinträchtigungen durch Erhöhungen der Speiseströme I2 und I3 der Funktionseinheiten 11 und 12 verursacht werden. Können die mit der Funktionseinheit 10 durchgeführten Steuerfunktionen nicht mehr ordnungsgemäß fortgesetzt werden, so ist die einwandfreie Arbeitsweise der Fernsprechteilnehmerstation nicht mehr gewährleistet, und aufgebaute Verbindungen können zusammenbrechen. Die analogen Funktionen der Funktionseinheit 11 sind demgegenüber von geringerer Bedeutung, so daß der Funktionseinheit 11 bei der Verteilung der verfügbaren elektrischen Speiseleistung eine geringere Priorität zukommt als der Funktionseinheit 10. Damit die Stromversorgung der Funktionseinheit 10 stets gewährleistet bleibt, ist der Funktionseinheit 11 die Strombegrenzungsschaltung 14 vorgeschaltet. Deren strombegrenzende Wirkung läßt zwar bei Bedarf einen Anstieg des Speisestroms I2 für die Funktionseinheit 11 zu, verhindert jedoch insbesondere solche Stromanstiege, die beispielsweise durch Übersteuerung oder Kurzschlüsse in den Analogfunktionen herbeigeführt werden können. Eine Variation des Strombedarfs dieser Analogfunktionen ist zwar möglich, jedoch nur innerhalb des durch die Strombegrenzungsschaltung 14 vorgegebenen Bereichs. Dieser ist so bemeßbar, daß der Strombedarf für die Funktionseinheit 10 stets gedeckt werden kann.

Die Funktionseinheit 12 hat gegenüber den Funktionseinheiten 10 und 11 die geringste Bedeutung, da bei ihr eine Absenkung des Speisestroms I3 zugunsten der Speiseströme I1 und I3 in Kauf genommen werden kann. Dies ist beispielsweise dann der Fall, wenn im Sendezustand der Fernsprechteilnehmerstation bei großem Schalldruck ein hoher Strom für den Mikrofonverstärker in der Funktionseinheit 11 benötigt wird, während die Lauthörfunktion der Funktionseinheit 12 in diesem Betriebszustand praktisch bedeutungslos ist.

Die Verteilung der Speiseleistung auf die Funktionseinheiten 10, 11 und 12 erfolgt nun durch Auswertung der Gesamtleistung P mit der Regelschaltung 16 unter Berücksichtigung der vorstehend erläuterten Prioritäten. Ein Beispiel einer solchen Aufteilung mit einem durch die Regelschaltung 16 bewirkten dynamischen Regelvorgang ist in Fig. 2 graphisch dargestellt. Diese Darstellung zeigt den Verlauf der Speiseleistung P über der Zeit t, wobei sich die der Fernsprechteilnehmerstation zugeführte Gesamtleistung Pmax aus den drei Einzelleistungen P10, P11 und P12 zusammensetzt, die den Funktionseinheiten 10, 11 und 12 zugeführt werden. Dabei ist vorausgesetzt, daß die Gesamtleistungsaufnahme bei ihrem vorgegebenen Grenzwert Pmax liegt. Die Darstellung in Fig. 2 zeigt nun eine Veränderung der Leistung P11, die ausgehend von einem Anfangswert bis zu einem Wert P11max ansteigt. Gleichzeitig nimmt die Leistung P12 proportional ab, so daß die Gesamtleistung Pmax erhalten bleibt. Diese dynamische Umverteilung der Leistungen P11 und P12 wird durch die Funktion der bereits beschriebenen Regelschaltung 16 (Fig. 1) bewirkt. Während der Zeit tm bleibt dann die Leistung P11max auf einem konstanten Wert, und nach dieser Zeit fällt die Leistung P11 wieder auf einen geringeren Wert ab, der etwa dem Anfangswert entspricht. Gleichzeitig nimmt die Leistung P12 wieder auf einen entsprechenden Wert zu. Fig. 2 zeigt also eine vorübergehende Erhöhung der Leistung P11 auf Kosten der Leistung P12 derart, daß die Gesamtleistung Pmax auf ihrem vorgegebenen Grenzwert bleibt. Gleichzeitig ist gewährleistet, daß die Leistung P10 stets erhalten bleibt. Durch die Begrenzung der Leistung P11 auf den Wert P11max wird einerseits dieser Forderung Rechnung getragen, andererseits wird bei dieser Dimensionierung verhindert, daß die Speiseleistung P12 unterbrochen wird.

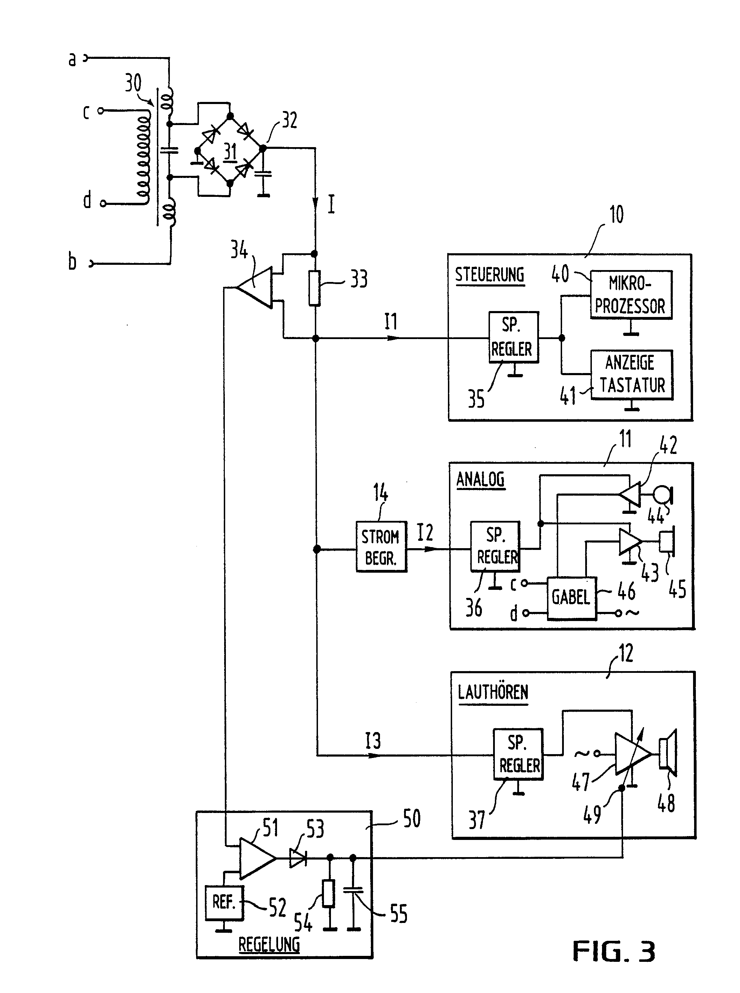

Fig. 3 zeigt eine erste technische Ausführungsform der dynamischen Leistungsverteilung in deutlicherer Darstellung. Es ist die Fernsprechteilnehmerstation mit ihren bereits erläuterten Funktionseinheiten 10, 11 und 12 gezeigt, die über die beiden Adern a und b der Teilnehmeranschlußleitung (nicht dargestellt) aus der Zentralbatterie der Vermittlungseinrichtung gespeist werden. Ein Übertrager 30 ermöglicht die Entkopplung der Sprachwechselspannung von der Teilnehmeranschlußleitung und ist an seinen Wicklungsanschlüssen c und d mit entsprechenden Anschlüssen innerhalb der Funktionseinheit 11 verbunden. In den Funktionseinheiten 11 und 12 werden die Analogfunktionen und die Sprachverstärkung durchgeführt. Der Übertrager 30 ist ferner auf der Leitungsseite mit einer Gleichrichterschaltung 31 verbunden, die als Verpolungsschutz dient und an ihrem Anschluß 32 den Gesamtspeisestrom I abgibt, mit dem die Funktionseinheiten 10, 11 und 12 gespeist werden und der die Gesamtspeiseleistung ermöglicht, deren Grenzwert Pmax nicht zu überschreiten ist.

In Fig. 2 sind die bereits erläuterten Funktionen der Funktionseinheiten 10, 11 und 12 dargestellt.

Zusätzlich enthält jede Funktionseinheit 10, 11 und 12 einen Spannungsregler 35, 36, 37, der Spannungsschwankungen der Versorgungsspannung ausregelt, so daß die ihm nachgeschalteten Funktionen eine stets gleichbleibende Versorgungsspannung erhalten.

Die steuernde Funktionseinheit 10 enthält einem Mikroprozessor 40 sowie eine Steuerschaltung 41 zur Steuerung der Funktionen einer Informationsanzeige und einer Tastatur. Die Funktionseinheit 11 enthält die Analogfunktionen zweier Sprachverstärker 42 und 43 für ein Mikrofon 44 und einen Hörer 45 sowie einer elektronischen Gabelschaltung 46, deren Anschlüsse c und d mit den entsprechenden Anschlüssen des Übertragers 30 verbunden sind und die von dem Sprachverstärker 42 gespeist wird und den Sprachverstärker 43 ansteuert. Die Funktionseinheit 12 enthält einen Lauthörverstärker 47, der einen Lautsprecher 48 speist und aus der Gabelschaltung 46 über nicht dargestellte Anschaltmittel gespeist wird. Der Lauthörverstärker 47 ist ein regelbarer Verstärker, dessen Verstärkung durch ein Signal an seinem Regeleingang 49 eingestellt werden kann.

Der Funktionseinheit 11 ist die bereits erläuterte Strombegrenzungsschaltung 14 vorgeschaltet.

Die Speiseströme $I1$, $I2$, $I3$ der Funktionseinheiten 10, 11 und 12 sind die Teilströme des Gesamtspeisestroms $I$, der über einen Strommeßwiderstand 33 geführt ist. Der an diesem auftretende Spannungsabfall ist dem Gesamtspeisestrom $I$ proportional und steuert einen Operationsverstärker 34, dessen Ausgangssignal auf den Vergleichseingang eines in der Regelschaltung 50 vorgesehenen Vergleichers 51 geführt ist. Der Referenzeingang dieses Vergleichers 51 wird mit einer Referenzspannung 52 angesteuert, die so bemessen sein kann, daß sie dem Ausgangssignal des Operationsverstärkers 34 entspricht, das sich ergibt, wenn der Gesamtspeisestrom $I$ den vorgegebenen Grenzwert erreicht oder diesem nahekommt. Wenn das Spannungssignal am Vergleichseingang des Vergleichers 51 die Referenzspannung 52 überschreitet, so gibt der Vergleicher 51 ein Ausgangssignal ab, das über eine Diode 53 mit einer durch einen Widerstand 54 und eine Kapazität 55 erzeugten Zeitkonstante an dem Regelanschluß 49 des Lauthörverstärkers 47 dessen Verstärkung so verstellt, daß sich eine Verringerung des Speisestroms $I3$ für diesen Verstärker ergibt. Dieser Effekt kann durch eine Erhöhung eines der Speiseströme $I2$ und $I3$ hervorgerufen werden. Die Regelschaltung 50 erfüllt also neben der Funktion einer Umverteilung der Speiseleistung auch die Funktion einer selbsttätigen Reduzierung des Speisestroms $I3$, wenn dieser durch erhöhte Stromaufnahme des Lauthörverstärkers 47 ansteigen sollte. Nimmt der erhöhte Speisestrom $I2$ oder $I3$ wieder ab, so verschwindet das Ausgangssignal der Regelschaltung 50, und es stellt sich der vorherige Zustand der Speiseleistungsverteilung wieder ein.

Abweichend von dem vorstehend beschriebenen Ausführungsbeispiel kann das erfindungsgemäße Prinzip auch bei solchen Systemen angewendet werden, bei denen keine Funktionseinheit vorgesehen ist, deren Speiseleistung dauernd aufrecht zu erhalten ist, wie es bei der vorstehend erläuterten Funktionseinheit 10 der Fall ist. Aus Fig. 2 ist ohne weiteres ersichtlich, daß die beschriebenen Vorgänge durch die Speiseleistung P10 nicht beeinflußt werden.

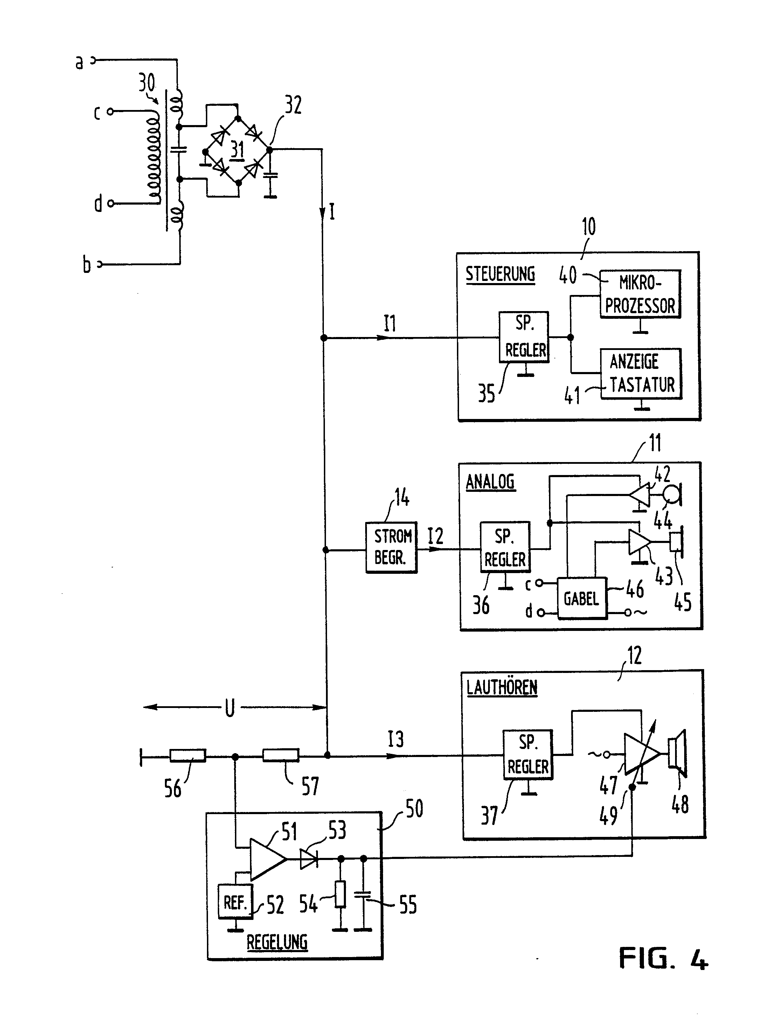

Fig. 4 zeigt eine Fernsprechteilnehmerstation mit gleichem Aufbau der Funktionseinheiten 10, 11, 12 und 14, wie er in Fig. 3 gezeigt ist. Hier wird aber nicht der Gesamtstrom $I$ zur Begrenzung der Leistungsaufnahme ausgewertet, sondern die Betriebsspannung. Diese ergibt sich aus der Quellenspannung der Zentralbatterie, reduziert um den Spannungsabfall an deren Innenwiderstand und den Leitungswiderständen, und ist in Fig. 4 mit $U$ bezeichnet.

Unterschreitet die Betriebsspannung $U$ einen bestimmten Grenzwert, der sich z.B. aus einer oder mehreren minimalen Eingangsspannungen der Spannungsregler 35, 36, 37 ergibt, so ist der Wert Pmax der maximalen Leistungsaufnahme erreicht. Jeder weitere Anstieg der Stromaufnahme $I2$ oder $I3$ führt zu einem Unterschreiten dieses vorgegebenen Grenzwertes durch höheren Spannungsabfall am Innenwiderstand der Zentralbatterie. Zur Auswertung dieses Vorganges wird eine der Betriebsspannung $U$ proportionale Spannung vom Abgriff eines Spannungsteilers mit Widerständen 56 und 57 an den Vergleichseingang des Vergleichers 51 geführt. Unterschreitet diese Spannung den durch die Referenzspannung 52 vorgegebenen Wert, so gibt der Vergleicher 51 ein Ausgangssignal ab, das über die Diode 53 und die Zeitkonstante aus Widerstand 54 und Kapazität 55 den Regeleingang 49 des Lauthörverstärkers 47 so verstellt, daß die Betriebsspannung $U$ durch eine geringere Stromaufnahme wieder ansteigt.

Das Ausgangssignal am Vergleicher 51 verschwindet wieder, aber der Regeleingang 49 wird noch entsprechend der beschriebenen Zeitkonstante der Elemente 54 und 55 auf dem letzten Wert gehalten. Danach kann durch erneutes Absinken der Spannung $U$ wieder ein Regelvorgang beschriebener Art einsetzen.

## Ansprüche

1. Schaltungsanordnung zum Verteilen elektrischer Speiseleistung auf mehrere Funktionseinheiten mit variabler Leistungsaufnahme bei Einhaltung eines vorgegebenen Grenzwertes der Gesamtspeiseleistung, der niedriger ist als die Summe der höchstmöglichen Einzelspeiseleistungen, insbesondere für leitungsgespeiste elektronische Teilnehmerstationen von Fernmelde-insbesondere Fernsprechanlagen, dadurch **gekennzeichnet**, daß ein Ansteigen der Leistungsaufnahme von Funktionseinheiten (11) höherer Priorität eine proportionale Verringerung der Leistungsaufnahme für Funktionseinheiten (12) geringerer Priorität verursacht, sofern durch dieses Ansteigen der Bereich des vorgegebenen Grenzwertes (Pmax) erreicht wird.

2. Schaltungsanordnung nach Anspruch 1, dadurch **gekennzeichnet**, daß für die Funktionseinheiten (11) höherer Priorität eine Strombegrenzung vorgesehen ist.

3. Schaltungsanordnung nach Anspruch 1 oder 2, dadurch **gekennzeichnet**, daß zur Verringerung der Leistungsaufnahme für Funktionseinheiten (12) geringerer Priorität ein Regelkreis (50) vorgesehen ist, dessen Steuergröße die allen Funktionseinheiten (10, 11, 12) zugeführte Gesamtleistung ist.

4. Schaltungsanordnung nach Anspruch 3, dadurch **gekennzeichnet**, daß der Regelkreis (50) einen die Stellgröße abgebenden Vergleicher (51) enthält, dem eine dem Gesamtstrom (I) proportionale Spannung und eine dem Grenzwert (Pmax) der Gesamtspeiseleistung entsprechende Referenzspannung (52) zugeführt sind.

5. Schaltungsanordnung nach Anspruch 3, dadurch **gekennzeichnet**, daß der Regelkreis (50) einen die Stellgröße abgebenden Vergleicher (51) enthält, dem eine der Betriebspannung (U) proportionale Spannung und eine dem Grenzwert (Pmax) der Gesamtspeiseleistung entsprechende Referenzspannung (52) zugeführt sind.

FIG. 1

FIG. 2

FIG. 3

FIG. 4